Europäisches Patentamt

European Patent Office

Office européen des brevets

(11) Publication number: **0 129 306**
**A1**

# (12) EUROPEAN PATENT APPLICATION

(21) Application number: **84302130.4**

(22) Date of filing: **29.03.84**

(51) Int. Cl.³: **C 03 B 37/025**

(30) Priority: **15.04.83 GB 8310274**

(43) Date of publication of application:
**27.12.84 Bulletin 84/52**

(84) Designated Contracting States:
**AT BE CH DE FR IT LI NL SE**

(71) Applicant: **STANDARD TELEPHONES AND CABLES PUBLIC LIMITED COMPANY**
**190 Strand**
**London, WC2R 1DU(GB)**

(72) Inventor: **Pitt, Nicholas John**
**341, Willowfield Tower**
**Harlow Essex, CM18 6SD(GB)**

(74) Representative: **Dennis, Mark Charles**
**STC Patent Department Edinburgh Way**
**Harlow Essex CM20 2SH(GB)**

(54) Optical fibre preform manufacture.

(57) In the manufacture of an optical fibre preform by a hydrogen-free direct oxidation deposition reaction on the bore of a substrate tube (10) nominally dry reagents are further dried by preheating them to 1000°C in a region upstream of the localised deposition zone. Alternatively or additionally similarly preheating drying of the atmosphere in the bore of the tube is employed during the subsequent collapse of the bore to form the preform, this atmosphere consisting of or containing chlorine gas.

This produces fibre with lower loss at 1.38 microns wavelength.

EP 0 129 306 A1

# FIBRE PREFORM MANUFACTURE

This invention relates to optical fibre preform manufacture, and is particularly concerned with reducing the level of hydroxyl contamination in a method of manufacture in which glass destined to form all the optical core and usually at least part of the optical cladding is deposited upon the bore of a substrate tube as the product of a hydrogen-free vapour deposition reaction, after which the deposit is exposed to an atomosphere consisting of or including chlorine gas while the bore is collapsed.

In this type of manufacture the atmosphere in the bore of the substrate tube both during deposition and in the course of collapse is important in determining the hydroxyl impurity content of optical fibre drawn from the resulting preform.  Typical reagents entering the bore during deposition are oxygen, silicon tetrachloride, germanium tetrachloride, minor quantities of other chlorides, or of oxychlorides such as that of phosphorus, fluorine, and possibly helium.  During collapse the atmosphere typically contains chlorine and oxygen, and may also contain germanium tetrachloride and possibly helium.  Although nominally dry reagents are used, residual amounts of water vapour are present whether they originate from contamination of the reagents or their carrier gases or from leaks of moist atmospheric air into the system.

If water vapour is present in the atmosphere within the bore of the substrate tube, then diffusion of water vapour through the glass surface will take place, and later water vapour in the glass will react to produce hydroxyl bonds in the glass whose absorption bands provide an undesirable contribution to optical loss.

During deposition the presence of the reagent chlorides will tend to dry the atmosphere because equilibrium for the reversable reaction

$$SiCl_4 + H_2O \rightleftharpoons SiO_2 + 4HCl$$

lies well to the right at typical deposition temperatures. However it is found that in the vapour phase this reaction proceeds quite slowly at temperatures below $400^{\circ}C$. Even when the reaction begins to proceed more rapidly as the temperature is raised, there is first a tendency for hydroxy-species, such as $SiOHCl_3$, to form. If these species do not react further to eliminate the hydrogen by the evolution of hydrogen chloride, but become absorbed on to the surface of the deposition tube, or are incorporated in particles produced by the deposition reaction which then are deposited on that surface, then the hydrogen will become finally incorporated in the glass where it will cause the undesirable loss to which previous reference has been made.

In consequence it is found that, although the presence of the reagents in the deposition atmosphere has a beneficial drying effect, this drying falls significantly short of being completely effective.

In the collapse process the addition of chlorine to an atmosphere of oxygen has a similar beneficial drying effect resulting from the reaction

$$2Cl_2 + H_2O \rightleftharpoons 4HCl + O_2$$

but in this reaction also the reaction rate is so slow that the drying falls significantly short of being completely effective.

According to a first aspect of the present invention there is provided a method of manufacturing an optical fibre preform, which method includes the step of coating the bore of a substrate tube with doped silica that is the product of a vapour reaction promoted in a localised hot zone translated axially along the tube, wherein the reaction is a direct oxidation reaction of a silicon halide together with one or more other halides or oxyhalides and is a reaction form which hydrogen and its compounds are excluded, which step is succeeded by the step of exposing the deposit to an atmosphere consisting of or including chlorine while the bore is collapsed, characterised in that in said coating step, upstream of the full extent of the translation of the hot zone, the reagents are preheated to a temperature which is sufficient to dry them by promoting a hydrolysis reaction between them and any residual moisture without being sufficient to promote any appreciable direct oxidation.

According to a second aspect there is provided a method of manufacturing an optical fibre preform, which method includes the step of coating the bore of a substrate tube with doped silica that is the product of a vapour reaction promoted in a localised hot zone translated axially along the tube, wherein the reaction is a direct oxidation reaction of silicon tetrachloride together with the halides or oxyhalides of one or more other elements and is a reaction from which hydrogen and its compounds are excluded, and which method includes the subsequent step of exposing the coating to chlorine gas while bore collapse is promoted in a localised hot zone translated axially along the coated tube, wherein during the collapse a flow of gas that consists of or includes chlorine is maintained through this tube until prevented by the complete closure of the bore of the tube at some point in its length, characterised in that in said subsequent step, upstream of the full extent of the translation of the bore collapse regime hot zone, the gas flow is preheated to a temperature of at least $1000^{\circ}C$ but substantially less than the downstream peak temperature of the bore collapse regime hot zone.

It is believed that this preheating during deposition and/or collapse, is effective in reducing the final hydroxyl content of the fibre preform by promoting reactions which remove hydrogen derived from moisture contamination from the tube in the form of hydrogen chloride before it is able to become incorporated in the material of the tube or the material with which that tube is internally coated.

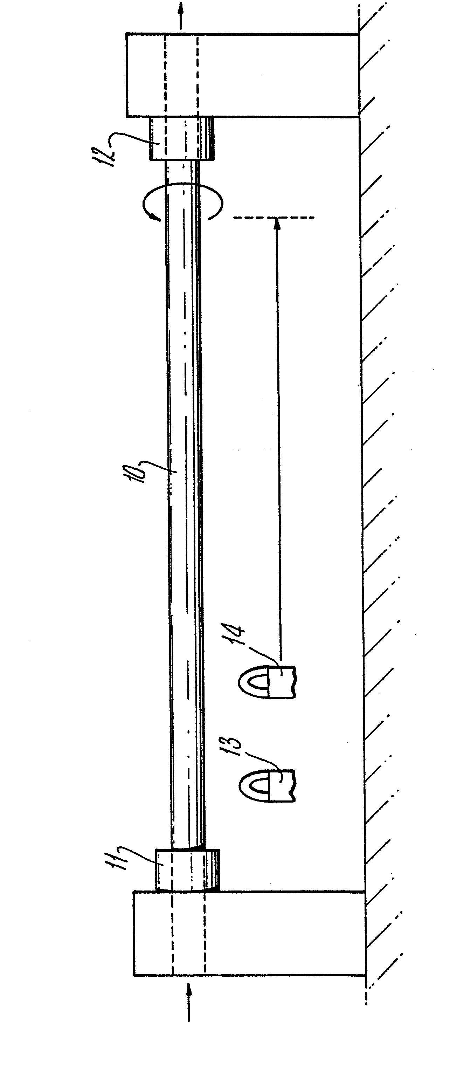

There follows a description of a method of manufacture of an optical fibre preform embodying the invention in a preferred form. The optical performance of fibre drawn from this preform is contrasted with fibre made by a method which is distinguished by the absence of the preheating characteristic of the present invention. The description refers to the accompanying drawing which schematically depicts the substrate tube mounted in a lathe in the course of deposition processing.

Referring to the accompanying drawing, a glass substrate tube 10, made of silica and typically about 1 metre long and 20 by 16 mm in diameter, is carefully cleaned and dried before being mounted in a special lathe having synchronously driven head and tail-stocks 11 and 12. Vapours and gases entrained in a carrier gas are supplied at a controlled rate from a vapour train (not shown) and introduced through a gas-tight rotary seal (not shown) into the head-stock end of the tube 10. The lathe is provided with a first oxy-hydrogen burner 13, which is stationary, and a second burner 14, which is translatable up and down the lathe bed between two points which are both downstream of the first burner. The first burner 13 is adjusted to provide a temperature of about $1000^{\circ}C$ inside the tube while, for deposition purposes, the second burner is adjusted to provide a temperature within the tube typically in the range 1500 to $1600^{\circ}C$.

(In each instance the corresponding temperature at the outer surface of tube is approximately 100°C higher than that obtaining inside the tube).

The deposition reaction is a direct oxidation reaction between oxygen and chlorides or oxychlorides of silicon and of the required dopant elements. This reaction does not proceed spontaneously at room temperatures, but is promoted by the action of the heat in the localised hot zone provided by the second burner 14. The material is deposited as a succession of layers, each layer being formed by a single traverse of burner 14 in the direction of gas flow (from the head-stock end to the tail-stock end). This traverse is at a slow carefully controlled rate providing a layer of uniform thickness in the axial direction while a slow rotation of the tube about its axis provides uniformity of thickness around the circumferance. After each layer has been deposited the burner 14 is turned down for return to the upstream end at a reduced temperature setting too low to provide any significant deposit.

The first few layers to be deposited are usually of material to form the optical cladding of the fibre to be pulled from the completed preform. Then the reagent composition is changed for the deposition of further layers to form the material of the optical core. Optionally the cladding material deposition may be preceded by deposition of barrier layer material in order to minimise the diffusion of impurities from the substrate tube into the cladding material and from there into the optical core material.

When the deposition stage has been completed the collapse of the bore is promoted by performing one or more further traverses of the second burner 14 with the burner flow rates adjusted to provide a hotter flame producing a temperature in the region of 2000°C at the outer surface of the tube and about 100° lower at the inner surface. This is sufficient to soften the tube to the extent that it begins to collapse under the effects of surface tension. Typically complete collapse of the bore is brought about by just two traverses. For the final traverse which seals the bore, and thus prevents continued flow of gas down the tube, the direction of traverse is reversed so that the seal commences at the tail-stock end and propagates up the tube towards the vapour train supply at the head-stock end. During the initial stages of the collapse procedure a flow of oxygen, chlorine, and optionally some germanium tetrachloride is maintained until prevented by the sealing of the tube. The oxygen counteracts any tendency for partial reduction to occur, the chlorine is useful as a drying agent tending to elliminate any residual moisture by reacting with it to evolve hydrogen chloride, while the germanium tetrachloride reacts with oxygen to produce germania and thereby tend to counteract for loss of germania from the core material by volatilisation.

In a particular instance of producing a preform for single mode fibre designed to operate at wavelengths in the region of 1.38 microns layers of silica doped with oxides of germania and phosphorus were deposited at a rate of approximately 0.25g/min to form the optical cladding before the deposition conditions were slightly changed to produce layers of core material consisting of silica doped solely with germania.

High purity silicon tetrachloride, germanium tetrachloride and phosphorus oxychloride were used as source reagents. The trichlorosilane impurity content of the silicon tetrachloride was between 10 and 20 parts per million. Oxygen dried to approximately 1 part per million of residual water was used as the carrier gas, and the hydroxyl content of the silica substrate tube was in the region of 150 parts per million.

The collapse of the bore of the coated tube was carried out using two traverses using an internal atmosphere of oxygen and chlorine. For the first traverse of collapse process the flow rate down the bore was 200 cc/min oxygen and 100 cc/min chlorine.

From the resulting preform optical fibre with a numerical aperture of 0.13 was drawn to an external diameter of 125 microns and this was coated with silicone to a diameter of 250 microns on-line with the fibre drawing operation.

Attenuation measurement at a wavelength of 1.38 microns revealed a loss in the range of 1 to 2 dB/km. Comparable measurements on similar fibre drawn from preform made under substantially the same conditions, but without lighting the first burner 13 for preheating the reagents prior to deposition and for preheating during collapse, revealed an average value loss of 4.4 dB/km at this wavelength.

CLAIMS:-

1.      A method of manufacturing an optical fibre preform, which method includes the step of coating the bore of a substrate tube with doped silica that is the product of a vapour reaction promoted in a localised hot zone translated axially along the tube, wherein the reaction is a direct oxidation reaction of a silicon halide together with one or more other halides or oxyhalides and is a reaction form which hydrogen and its compounds are excluded, which step is succeeded by the step of exposing the deposit to an atmosphere consisting of or including chlorine while the bore is collapsed, characterised in that in said coating step, upstream of the full extent of the translation of the hot zone, the reagents are preheated to a temperature which is sufficient to dry them by promoting a hydrolysis reaction between them and any residual moisture without being sufficient to promote any appreciable direct oxidation.

2.      A method as claimed in claim 1 wherein the silicon halide is silicon chloride.

3.      A method as claimed in claim 1 or 2 wherein the reagent preheating is performed in the substrate tube.

4.      A method as claimed in any preceding claim wherein the reagent preheating is to a temperature of 1000°C or greater.

5.      A method of manufacturing an optical fibre preform, which method includes the step of coating the bore of a substrate tube with doped silica that is the product of a vapour reaction promoted in a localised hot zone translated axially along the tube, wherein the reaction is a direct oxidation reaction of silicon tetrachloride together with the halides or oxyhalides of one or more other elements and is a reaction from which hydrogen and its compounds are excluded, and which method includes the subsequent step of exposing the coating to chlorine gas while bore collapse is promoted in a localised hot zone translated axially along the coated tube, wherein during the collapse a flow of gas that consists of or includes chlorine is maintained through this tube until prevented by the complete closure of the bore of the tube at some point in its length, characterised in that in said subsequent step, upstream of the full extent of the translation of the bore collapse regime hot zone, the gas flow is preheated to a temperature of at least 1000$^{\circ}$C but substantially less than the downstream peak temperature of the bore collapse regime hot zone.

6.      A method as claimed in claim 5, wherein the preheating upstream of the bore collapse regime hot zone is performed in the substrate tube.

7.      A method as claimed in claim 5 or 6, wherein the direct oxidation deposition reaction is performed by the method claimed in claim 1, 2, 3 or 4.

8.      An optical fibre preform made by the method claimed in any preceding claim.

9.      An optical fibre drawn from preform as claimed in claim 9.

0129306

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | EP-A-0 038 982 (WESTERN ELECTRIC COMPANY) * Page 14; page 16, lines 20-37; page 17, lines 1-15; claims 1,2,5,7,15,25,28 * | 1,5,6 | C 03 B 37/025 |

-----

TECHNICAL FIELDS SEARCHED (Int. Cl. ³)

C 03 B 37/00
C 03 C 17/00

The present search report has been drawn up for all claims

| Place of search | Date of completion of the search | Examiner |
|---|---|---|
| THE HAGUE | 27-06-1984 | VAN DEN BOSSCHE W.L. |